# EUROPÄISCHE PATENTSCHRIFT

(11) **EP 1 519 272 B1**
(45) Veröffentlichungstag und Bekanntmachung des Hinweises auf die Patenterteilung: **23.06.2010**
(21) Anmeldenummer: 04023110.2
(22) Anmeldetag: 28.09.2004
(51) Int. Cl.: G05B 9/03, G06F 11/16

(54) **Safetymodul zur Verarbeitung sicherheitsrelevanter Bedienung insbesondere von Stop- und Zustimmungstastern eines mobilen Bedien- und Beobachtungsgeräts in einem HMI System**
Module for processing safety relevant control input from the emergency stop and confirmation push buttons of a mobile HMI system
Module de traitement de commandes affectant la sécurité issues de boutons d'arrêt de secours et de confirmation dans un système HMI portable.

(30) Priorität: 29.09.2003 DE 10345633
(43) Veröffentlichungstag der Anmeldung: 30.03.2005
(73) Patentinhaber: SIEMENS AKTIENGESELLSCHAFT, 80333 München (DE)
(72) Erfinder: Rieger, Gottfried, 90766 Fürth (DE); Sinn, Ulrich, 91056 Erlangen (DE)

(56) Entgegenhaltungen:
- EP-A- 1 407 860
- DE-A1- 4 441 070
- DE-A1- 10 065 907
- DE-A1- 19 920 299
- ANDERSON K: "IMPLEMENTATION COST/BENEFITS FOR FAULT TOLERANT SYSTEMS" ISA TRANSACTIONS, INSTRUMENT SOCIETY OF AMERICA. PITTSBURGH, US, Bd. 30, Nr. 4, 1. Januar 1991 (1991-01-01), Seiten 107-116, XP000275598 ISSN: 0019-0578

## Beschreibung

Die Erfindung betrifft ein mobiles Bedien- und Beobachtungsgerät mit einem Safetymodul zur Verarbeitung von Eingaben für die Steuerung eines technischen Prozesses, und ein HMI System mit zumindest einem derartigen mobilen Bedien- und Beobachtungsgerät.

Technische Prozesse werden mit speziellen digitalen Datenverarbeitungssystemen, auch Automatisierungssystem genannt, gesteuert. In einem solchen System sind einerseits zur direkten Steuerung des Prozesses dienende Geräte vorhanden, d.h. speicherprogrammierbare Steuerungen SPS, auch als "PLC - Programmable Logic Controller" bezeichnet. Zur Entlastung dieser Steuerungen weisen Automatisierungssysteme weitere Geräte auf, welche eine Schnittstelle für Bedienpersonal bilden. Diese werden als Bedienen- und Beobachtungsgeräte, abgekürzt B+B- oder HMI Geräte, d.h. Human Machine Interface, bezeichnet. Der Begriff HMI Gerät ist ein Oberbegriff und umfaßt alle zu dieser Gruppe von Geräten gehörigen Komponenten. Als ein Beispiel sollen "Operator Panels", auch als "Bedienpanels" bzw. kurz als "OP" bezeichnet, genannt werden. Diese sind zunehmend mobil ausgeführt und über eine Funkschnittstelle datentechnisch mit dem Automatisierungssystem verbunden. HMI Geräte dienen in einem vernetzten Automatisierungssystem als Hilfsmittel für Bedienpersonal, um Prozessdaten einer zu steuernden technischen Anlage anzeigen und bedienen zu können. Diese Funktion wird mit "Supervisor Control and Data Akquisition" (SCADA) bezeichnet. Hierzu ist das HMI Gerät in der Regel hardwaremäßig speziell aufgebaut, d.h. es verfügt z.B. über einen Touchscreen und ist gegen Umwelteinflüsse besonders abgeschirmt. Weiterhin wird darin eine spezielle Software ausgeführt. Diese stellt Funktionen bereit, womit Komfort, Qualität und sicherheit einer Bedienung durch eine Bedienperson verbessert. So können über HMI Geräte z.B. interaktive Prozessabbilder der technischen Anlage visualisiert und bedient, aber auch projektiert und generiert werden. Hiermit ist einerseits eine selektive Anzeige von Reaktionen einer technischen Anlage möglich, meist in Form von Messwerten und Meldungen. Andererseits wird es durch gezielte Vorgabe von Bedienhandlungen und Dateneingaben ermöglicht, die technische Anlage in gewünschte Zustände zu überführen.

Von einer Bedienperson können auch Bedienhandlungen vorgenommen werden, die als sicherheitsrelevante Eingaben eingestuft werden müssen. Dabei muss einerseits sichergestellt werden, dass die Bedienperson diese Eingaben z.B. unter zu Hilfenahme eines mobilen Bedien- und Beobachtungsgeräts bewusst und nicht versehentlich vornimmt. Andererseits muss sichergestellt werden, dass bei der datentechnischen Verarbeitung derartiger Eingaben in einem HMI System, d.h. insbesondere bei deren Übertragung von dem mobilen Bedien- und Beobachtungsgerät zu einer Zentralstation, keine Fehler auftreten.

Die Druckschrift DE 199 20 299 A1 beschreibt ein mobiles Bedien- und Beobachtungsgerät mit einer externen Datenschnittstelle zur kabellosen Absendung von Datenpaketen an eine Zentralstation, wobei ein Funk-Telegramm genutzt wird, das sicherheitsrelevante Daten und nicht sicherheitsrelevante Daten umfasst.

Die Druckschrift EP 1 407 860 A2, die zum Stand der Technik im Sinne des Artikels 54(3) EPÜ gehört, offenbart ein mobiles Bedien- und Beobachtungsgerät mit zwei Verarbeitungseinheiten, welche unabhängig voneinander sicherheitsrelevante Daten bearbeiten und diese direkt an eine jeweilige Schaltung senden, wobei jede Schaltung daraus ein Datenpaket generiert.

Der Erfindung liegt die Aufgabe zu Grunde, ein verbessertes mobiles Bedien- und Beobachtungsgerät zur Vorgabe von sicherheitsrelevanten Eingaben anzugeben, welches in einem HMI System einsetzbar ist.

Die der Erfindung zu Grunde liegende Aufgabe wird mit den Merkmalen des im Anspruch 1 angegebenen mobilen Bedien- und Beobachtungsgeräts gelöst.

Das erfindungsgemäße mobiles Bedien- und Beobachtungsgerät umfasst ein Safetymodul. Dieses weist wiederum zumindest ein Eingabeelement zur Auslösung einer sicherheitsrelevanten Eingabe auf. Zwei Verarbeitungseinheiten leiten aus der sicherheitsrelevanten Eingabe jeweils ein Safety-Datenpaket ab und vergleichen diese miteinander. Über eine Datenschnittstelle wird im Falle einer Übereinstimmung das eine der Safety- Datenpakete zur Einspeisung in einen Kommunikationskanal für Datenpakete bereitgestellt.

Diese Ausführung bietet den Vorteil, dass diese eine kompakte Baueinheit darstellen kann und somit mit überschaubarem Aufwand in die Architektur bereits vorhandener Geräte, insbesondere mobiler Bedien- und Beobachtungsgeräte, eingebunden werden kann. Weiterhin erfüllt die Anordnung die Anforderung an die sog. "Diversität", in dem das zu einer sicherheitsrelevanten Eingabe gehörige Safety- Datenpaket quasi zwei mal bestimmt wird. Erst wenn die Konvertierungsergebnisse der beiden voneinander unabhängigen Verarbeitungseinheiten identisch sind, wird ein Safety-Datenpaket zur Einspeisung in einen Kommunikationskanal freigegeben.

Bei einer weiteren Ausführung der Erfindung ist die eine Verarbeitungseinheit des Safetymoduls als eine Mastereinheit über die Datenschnittstelle an den Kommunikationskanal für Datenpakete ankoppelbar, während die andere Verarbeitungseinheit als eine Slaveeinheit mit der einen Verarbeitungseinheit verbunden ist. Die andere, redundante Verarbeitungseinheit stellt also das Verarbeitungsergebnis der Mastereinheit zum Zwecke eines Vergleichs bereit. Die Mastereinheit übernimmt dann die Einspeisung des durch Vergleich zertifizierten Safety-Datenpakets in den Kommunikationskanal.

Bei einer weiteren, vorteilhaften Ausführung der Erfindung werden in den Verarbeitungseinheiten des Safetymoduls zur Ableitung der Safety-Datenpakete Safety-Applikationen ausgeführt, die auf unterschiedlichen programmtechnischen Implementierungen beruhen. Werden in diesem Falle also durch Bearbeitung einer sicherheitsrelevanten Eingabe mit zwei programmiertechnisch unterschiedlichen Softwarelösungen identische Ergebnisse erzielt, sind also die beiden redundanten Safety-Datenpakete vollständig übereinstimmenden, so wird hierdurch ein großer Gewinn an Sicherheit erzielt.

Vorteilhaft ist das Eingabeelement zur Auslösung einer sicherheitsrelevanten Eingabe auf dem Safetymodul ein Stop-Taster, insbesondere ein Not-Aus-Taster. Bei einer weiteren Ausführung kann das Safetymodul auch mit zwei Eingabeelementen zur Auslösung sicherheitsrelevanter Eingaben ausgerüstet sein. Bevorzugt handelt es sich dabei um einen Stop-Taster und einen Zustimmungstaster. Taster dieser Art spielen bei der Bedienung einer technischen Anlage eine besondere Rolle. Es wird als besonders vorteilhaft angesehen, wenn sowohl die Eingabeelemente, welche sicherheitsrelevante Eingaben durch Personen ermöglichen, als auch die Verarbeitungseinheiten, welche daraus Safety- Datenpakete ableiten, zu einer bevorzugt kompakten Baueinheit zusammengefasst sind.

Ein Safety-Datenpaket enthält Elemente und Funktionen, die bei einer sicherheitsgerechten Einbettung einer z.B. binären, sicherheitsrelevanten Eingabe durch eine Verarbeitungseinheit üblich sind. So kann die Verarbeitungseinheit z.B. den Bitumfang eines Safety-Datenpaketes durch bekannte Prüfsummenalgorithmen absichern. In das Safety-Datenpaket wird dann der aktuelle Prüfsummenwert eingetragen. Weiterhin kann die Safety-Applikation einer Verarbeitungseinheit jedem Datenpaket eine Adresse einprägen, die für das dazugehörige Safetymodul kennzeichnend ist. Damit ist die Erkennung eines Eingabeelements möglich, über das eine sicherheitsrelevanten Eingabe verursacht wurde. Bei einer weiteren Ausführung kann in der Verarbeitungseinheit ein Zähler verwaltet werden. Jedes von dem dazugehörigen Safetymodul erzeugte Safety-Datenpaket weist dann vorteilhaft eine fortlaufenden Nummer auf. Auf der Seite einer Zentralstation, welche diese Safety-Datenpakete empfängt und auswertet, kann somit auf einfache Weise eine Sortierung aller in der Vergangenheit entgegen genommenen Safety-Datenpakete vorgenommen werden. Mit den obigen Verarbeitungen ist nicht nur eine Authentifizierung des logischen Inhalts eines jeden Safety-Datenpakets sichergestellt. Vielmehr stellt ein jedes Safety-Datenpaket auch ein Unikat dar. Auch hierdurch wird die Sicherheit gegenüber Datenverfälschungen z.B. bei der Datenpaketgenerierung und deren Übertragung, verbessert. Selbstverständlich können bei der Ableitung der Safety-Datenpakete auch weitere, für einen Fachmann zur weiteren Verbesserung der Datensicherheit übliche bzw. vorteilhafte Maßnahmen vorgesehen und z.B. in der Safety-Applikation einer Verarbeitungseinheit implementiert werden.

Gemäß der Erfindung weist ein mobiles Bedien- und Beobachtungsgerät, das mit einer Ausführung des oben beschriebenen Safetymoduls ausgerüstet ist, eine externe Datenschnittstelle zumindest zur kabellosen Absendung von Datenpaketen an eine Zentralstation auf. Weiterhin ist eine lokale Verarbeitungseinheit vorhanden, die eine HMI-Applikation datentechnisch bearbeitet und hieraus zumindest HMI-Datenpakete erstellt. Das Bedien- und Beobachtungsgerät verfügt weiterhin über einen Kommunikationskanal für Datenpakete, der mit der Datenschnittstelle des Safetymoduls, der lokalen Verarbeitungseinheit und der externen Datenschnittstelle verbunden ist.

Diese Ausführung bietet den Vorteil, dass ein Safetymodul auf einfache Weise an den im mobilen Bedien- und Beobachtungsgerät vorhandenen Kommunikationskanal für Datenpakete angekoppelt werden kann. Über den Kommunikationskanal werden dann zusätzlich zu den HMI-Datenpaketen auch Safety-Datenpakete übertragen.

Gemäß der Erfindung weist das mobile Bedien- und Beobachtungsgerät zusätzlich einen Datenpaketselektor auf. Dieser ermöglicht eine anwendungsabhängige Steuerung der Reihenfolge einer Weiterleitung von Safety-Datenpaketen und HMI-Datenpaketen auf dem Kommunikationskanal bis zur externen Datenschnittstelle.

Auch durch diese Maßnahme wird eine mögliche Nachrüstung eines erfindungsgemäßen Safetymoduls in ein vorhandenes mobiles Bedien- und Beobachtungsgerät bzw. eine nachträgliche Einbindung in eine vorliegende Gerätearchitektur erleichtert. Dabei kann bereits die Nachrüstung eines Datenpaketselektors ausreichend sein. Dies kann praktisch auf einfache Weise z.B. durch ein Softwareupdate erfolgen, falls die Funktion des Datenpaketselektors vorteilhaft durch eine Applikation realisiert wird, die von der lokalen Verarbeitungseinheit im mobilen Bedien- und Beobachtungsgerät ausgeführt wird. In vielen Fällen verfügt ein mobiles Bedien- und Beobachtungsgerät bereits über einen internen Kommunikationskanal, der zumindest die lokale Verarbeitungseinheit mit der externen Datenschnittstelle verbindet. Hierüber werden z.B. von der lokalen Verarbeitungseinheit erstellte HMI-Datenpakete bevorzugt über Funk an eine Zentraleinheit übermittelt. Andererseits können auch HMI-Datenpakete von der Zentraleinheit generiert und zum mobilen Bedien- und Beobachtungsgerät übermittelt werden. Diese werden dort von der externen Datenschnittstelle empfangen, in den internen Kommunikationskanal eingespeist und von der lokalen Verarbeitungseinheit weiterverarbeitet. HMI-Datenpakete können z.B. Anzeigedaten, Meldungen, Vorgabewerte und vieles mehr enthalten. Da diese in der Regel keinen unmittelbaren Eingriff z.B. auf Betriebsmittel eines technischen Prozesses zur Folge haben, müssen diese normalerweise nicht durch eine Safety-Applikation weiter bearbeitet werden.

Wird nun ein Safetymodul über dessen Datenschnittstelle an den Kommunikationskanal eines mobilen Bedien- und Beobachtungsgeräts angekoppelt, so werden vom Kommunikationskanal nun nicht nur ankommende bzw. abgehende HMI-Datenpakete, sondern auch vom Safetymodul generierte, meist abgehende, Safety-Datenpakete übertragen. Über einen zusätzlichen Datenpaketselektor kann die Priorität einer Datenpaketweiterleitung auf dem Kommunikationskanal anwendungsabhängig eingestellt werden. Vorteilhaft räumt der Datenpaketselektor bei der Einspeisung von Datenpaketen in den Kommunikationskanal Safety-Datenpaketen Vorrang vor HMI-Datenpaketen ein. Safety- Datenpakete werden also möglichst ohne weitere Verzögerung weitergeleitet, damit die möglichst schnell über die externe Datenschnittstelle an eine Zentraleinheit übertragen und dort unverzüglich bearbeitet werden können. Bis auf die Priorisierung werden aber die Safety-Datenpakete von der Infrastruktur des mobilen Bedien- und Beobachtungsgeräts grundsätzlich in der gleichen Weise wie HMI-Datenpakete behandelt. Es wird als ein besonderer Vorteil der Erfindung angesehen, dass Safety-Datenpakete zwar mit Hilfe der Elemente im Inneren eines mobilen Bedien- und Beobachtungsgeräts übertragen werden, diese aber die Infrastruktur des mobilen Bedien- und Beobachtungsgeräts ohne irgend eine weitere Auswirkung auf dessen Funktionalität durchlaufen.

Ein gemäß der Erfindung gestaltetes HMI System weist zumindest ein mobiles Bedien- und Beobachtungsgerät in einer der oben beschriebenen Ausführungen zur Bedienung- und Beobachtung des technischen Prozesses auf. Es enthält weiterhin zumindest eine Zentralstation zur Steuerung des technischen Prozesses. Diese weist eine externe Datenschnittstelle zumindest zum Empfang von Datenpaketen von einem mobilen Bedienund Beobachtungsgerät und eine zentrale Verarbeitungseinheit auf. Die zentrale Verarbeitungseinheit dient zumindest zur Verarbeitung von empfangenen HMI-Datenpaketen und zur Dekodierung der sicherheitsrelevanten Eingaben aus Safety- Datenpaketen und zur Überprüfung von deren Datenintegrität.

Wie oben am beispielhaften Inhalt von Safety-Datenpaketen beschrieben, kann die zentrale Verarbeitungseinheit also z.B. eine mitgelieferte Prüfsumme auf Plausibilität überprüfen. Weiterhin können Adressen, laufende Nummern und vieles mehr überprüft werden, um die inhaltliche Richtigkeit und korrekte Absenderzuordnung eines Safety-Datenpakets sicherzustellen, bevor der darin enthaltene sicherheitsrelevante Eingabewerte tatsächlich ausgeführt wird.

Die Erfindung wird anhand der in den Figuren dargestellten Ausführungsbeispiele weiter erläutert. Dabei zeigen
- Fig. 1: ein mobiles Bedien- und Beobachtungsgerät gemäß der Erfindung, und
- Fig. 2: die Verarbeitung von Datenpaketen bei einem erfindungsgemäßen mobilen Bedien- und Beobachtungsgerät in Form eines Blockschaltbildes.

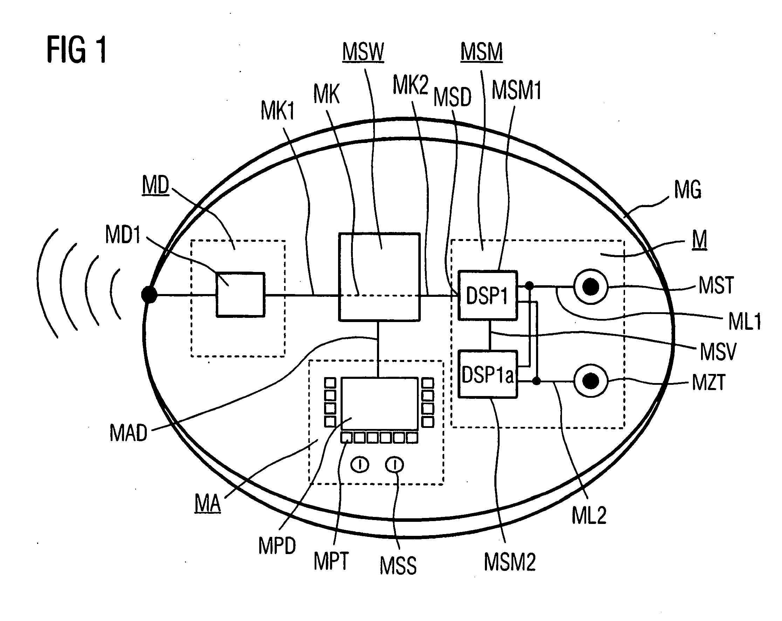

Fig. 1 zeigt ein beispielhaft in Form eines Hand-Held- Terminals ausgeführtes mobiles Bedien- und Beobachtungsgerät M. Das Gehäuse MG des mobilen Bedien- und Beobachtungsgeräts M, das in Figur 1 nur schematisch dargestellt ist, ist gegenüber Umwelteinflüssen abgeschirmt und von einer Bedienperson auf einfache Weise handhabbar. Es ermöglicht die Beobachtung und Bedienung eines technischen Prozesses.

Hierzu weist es ein auf der Oberseite des Gehäuses MG befindliches Anzeige- und Bedienmodul MA auf, das anwendungsabhängig eine Vielzahl von Anzeige- und Bedienelementen unterschiedlichen Typs enthalten kann. Im Beispiel der Fig. 1 ist ein Display MPD zur Anzeige von HMI-Applikationen, drei entlang der Seitenkanten des Displays MPD angeordnete Tastenfelder MPT z.B. zur Eingabe von Applikationsbefehlen und ein Paar von Schlüsselschaltern MSS gezeigt. Eine HMI-Applikation hat insbesondere die Aufgabe, den aktuellen Zustand eines technischen Prozesses zu visualisieren, z.B. durch Ausgabe von dynamischen Prozessabbildern auf dem Display MPD, und einer Bedienperson gezielte Eingriffe insbesondere zur Bewirkung von Zustandsänderungen zu ermöglichen.

Zur Ausführung von einer oder mehreren HMI-Applikationen dient eine lokale Verarbeitungseinheit MSW. Hierzu kann die Verarbeitungseinheit MSW HMI-Datenpakete z.B. entgegennehmen und in HMI-Applikationen bearbeiten. HMI-Datenpakete können in einem vernetzten HMI System z.B. von einer Zentraleinheit generiert und dem mobilen Bedien- und Beobachtungsgerät M bevorzugt per Funk zugestellt wurden. Die HMI- Datenpakete werden in einer externen Datenschnittstelle MD von einer kabellosen Datenkoppeleinheit MD1, insbesondere einer Funkstrecke, empfangen und in einen Kommunikationskanal MK eingespeist. Dieser verbindet über einen ersten Bereich MK1 die externe Datenschnittstelle MD und die lokale Verarbeitungseinheit MSW miteinander. Nach Bearbeitung empfangener HMI- Datenpakete können von der lokalen Verarbeitungseinheit MSW z.B. Anzeigedaten, Meldungen und vieles mehr über einen Datenanschluss MAD an das Anzeige- und Bedienmodul MA übertragen und dort insbesondere auf dem Display MPD zur Anzeige gebracht werden.

Andererseits ist es auch möglich, dass die lokale Verarbeitungseinheit MSW aus Eingabewerten z.B. von einem der Tastenfelder MPT, die über den Datenanschluss MAD übertragen wurden, selbständig HMI-Datenpakete generiert und diese in den Kommunikationskanal MK einspeist. Diese werden dann wiederum über den ersten Bereich MK1 an die externe Datenschnittstelle MD übertragen und von dort auf berührungslose Weise z.B. an eine Zentraleinheit abgestrahlt.

Erfindungsgemäß ist das mobile Bedien- und Beobachtungsgerät M mit einem Safetymodul MSM ausgerüstet. Im Beispiel der Fig. 1 weist dieses zwei Eingabeelemente auf, nämlich einen Stop-Taster MST, dem auch die Funktion eines Not-Aus-Tasters zugewiesen sein kann, und einen Zustimmungstaster MZT. Sowohl das Signal ML1 des Stop-Tasters MST und als auch das Signal ML2 des Zustimmungstasters MZT werden einer ersten und einer zweiten Verarbeitungseinheit MSM1 und MSM2 zugeführt. Wie oben bereits erläutert wurde, werden von diesen eine erste bzw. eine zweite Safety-Applikation ausgeführt. Diese können zwar bezüglich der Progammcodierung vorteilhaft unterschiedlich sein, generieren aber im störungsfreien Betrieb bei übereinstimmenden Eingabewerten auch identische Safety- Datenpakete. Betätigt eine Bedienperson z.B. den Stop-Taster MST, so wird von der ersten Verarbeitungseinheit MSM1 ein Safety-Datenpaket DSP1 und von der zweiten Verarbeitungseinheit MSM2 ein Safety-Datenpaket DSP1a generiert. Sind diese identisch, so wird eines der Safety-Datenpakete an einer Datenschnittstelle MSD des mobilen Bedien- und Beobachtungsgeräts M zur Einspeisung in den Kommunikationskanal MK bereitgestellt.

Erfindungsgemäß verbindet der Kommunikationskanal MK für Datenpakete die lokale Verarbeitungseinheit MSW einerseits mit der externen Datenschnittstelle MD, in Fig. 1 über den Bereich MK1, und andererseits der mit der Datenschnittstelle MSD des Safetymoduls MSM, in Fig. 1 über den Bereich MK2. Im Beispiel der Fig. 1 ist zudem die erste Verarbeitungseinheit MSM1 an die Datenschnittstelle MSD des Safetymoduls MSM angekoppelt und bewirkt die Einspeisung eines Safety-Datenpakets in den Kommunikationskanal MK. Die Verarbeitungseinheit MSM1 übernimmt somit bei der dargestellten Ausführung die Funktion eines Masters, während der zweiten Verarbeitungseinheit MSM2 die Aufgabe eines Slaves zukommt. Die Verarbeitungseinheit MSM2 bestimmt, wie oben beschrieben, in redundanter Weise aus einer sicherheitsrelevanten Eingabe ebenfalls ein Safety-Datenpaket DSP1a und stellt dieses der ersten Verarbeitungseinheit MSM1 über eine Datenquerverbindung MSV zu Vergleichszwecken zur Verfügung. Ergibt der Vergleich eine Übereinstimmung der Safety-Datenpakete DSP1 und DSP1a, so speist die erste Verarbeitungseinheit MSM1 das Datenpakete DSP1 in den zweiten Bereich MK2 des Kommunikationskanals MK ein. Das Datenpaket gelangt durch Vermittlung der lokalen Verarbeitungseinheit MSW bis zur externen Datenschnittstelle MD und wird schließlich bevorzugt per Funk z.B. vom mobilen Bedien- und Beobachtungsgerät M an eine Zentraleinheit übertragen.

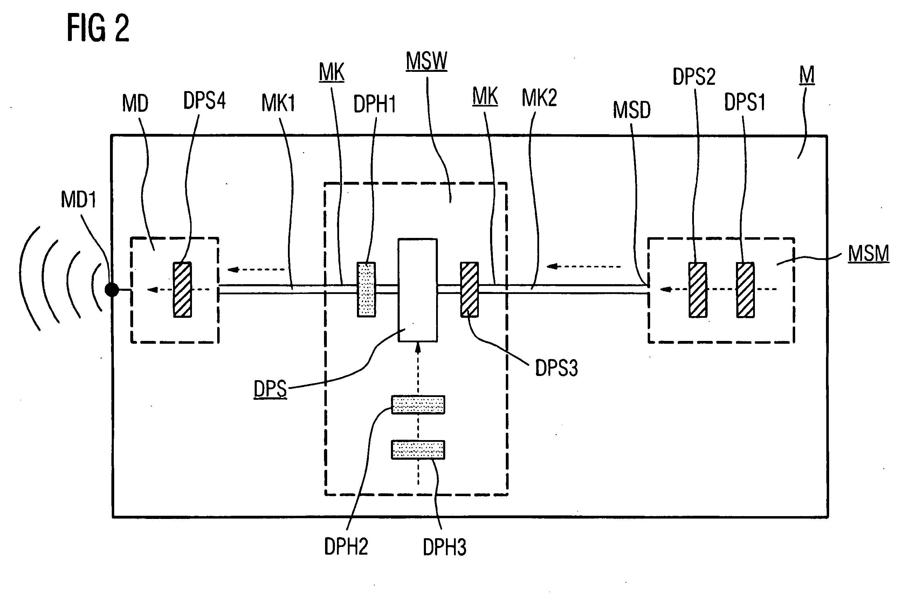

Mit dem in Fig. 2 dargestellten Blockschaltbild wird nachfolgend die Verarbeitung von Datenpaketen im mobilen Bedien- und Beobachtungsgerät M erläutert. Dieses weist gemäß der Erfindung zusätzlich einen Datenpaketselektor DPS auf. Dieser ist bevorzugt in Form einer Software- Applikation realisiert, die von der lokalen Verarbeitungseinheit MSW ausgeführt wird.

Im Beispiel der Fig. 2 wurden vom Datenpaketselektor DPS zunächst ein Safety-Datenpaket DPS4 und in Folge davon ein HMI-Datenpaket DPH1 in den Bereich MK1 des Kommunikationskanals MK weitergeleitet. Das Safety-Datenpaket DPS4 wird dabei gerade in der externen Datenschnittstelle MD verarbeitet und über die Datenkoppeleinheit MD1 abgestrahlt. Das HMI- Datenpaket DPH1 wurde gerade vom Datenpaketselektor DPS zur Weiterleitung an die externen Datenschnittstelle MD ausgewählt.

Im Beispiel der Fig. 2 ist weiterhin gezeigt, dass dem Datenpaketselektor DPS die Safety-Datenpakete DPS1 bis DPS3 über den Bereich MK2 des Kommunikationskanals MK und die HMI-Datenpakete DPH2 und DPH3 aus einer HMI-Applikation heraus zuführbar sind. Bezüglich der beiden Safety-Datenpakete DPS1 und DSP2 ist im Blockschaltbild der Fig. 2 symbolisiert, dass diese vom Safetymodul MSM generiert wurden und in dessen Datenschnittstelle MSD zur Einspeisung in den Kommunikationskanal MK bereitstehen. Demgegenüber ist das Safety-Datenpaket DPS3 bereits eingespeist und steht für einen Zugriff des Datenpaketselektors DPS bereit. Andererseits warten die HMI-Datenpakete DPH2 und DPH3 ebenfalls auf einen Zugriff des Datenpaketselektors DPS. Es ist nun anwendungsabhängig vorgebbar, ob im dargestellten Falle der Datenpaketselektor DPS zuerst das HMI-Datenpaket DPH2 oder das Safety-Datenpaket DPS3 zur Weiterleitung an die externen Datenschnittstelle MD freigibt. Bevorzugt wird der Datenpaketselektor DPS so eingestellt, dass Safety-Datenpaketen Vorrang vor HMI-Datenpaketen eingeräumt wird. Im Beispiel der Fig. 2 würde somit die Weiterleitung der Datenpakete in der Reihenfolge DPS3, DPS2, DPS1, DPH2 und DPH3 erfolgen. Enthalten die Safety- Datenpakete sicherheitsrelevante Eingaben, so können diese vor den unkritischen HMI-Datenpaketen bis zu einer Zentraleinheit gelangen und dort sofort bearbeitet werden.

## Patentansprüche

1. Mobiles Bedien- und Beobachtungsgerät (M) mit einem Safetymodul (MSM) zur Verarbeitung von Eingaben für die Steuerung eines technischen Prozesses, mit
a) zumindest einem Eingabeelement (MST) zur Auslösung einer sicherheitsrelevanten Eingabe (ML1),
b) zwei Verarbeitungseinheiten (MSM1; MSM2), welche aus der sicherheitsrelevanten Eingabe (ML1) jeweils ein Safety-Datenpaket (DSP1; DSP1a) ableiten und diese über eine zwischen den Verarbeitungseinheiten (MSM1; MSM2) angeordneten Datenquerverbindung (MSV) miteinander vergleichen, und mit
c) einer Datenschnittstelle (MSD), worüber im Falle einer Übereinstimmung das eine der Safety-Datenpakete (DSP1) zur Einspeisung in einen Kommunikationskanal (MK) für Datenpakete (DSP1...;DPH1...) bereitgestellt wird, wobei das mobile Bedien- und Beobachtungsgerät aufweist
d) eine externe Datenschnittstelle (MD) zumindest zur kabellosen Absendung der Datenpakete (DSP1...:DPH1...) an eine Zentralstation,
e) eine lokale Verarbeitungseinheit (MSW), die eine HMI-Applikation (MSW) datentechnisch bearbeitet und hieraus zumindest HMI-Datenpakete (DPH1...DPH4) erstellt, und
f) einen Datenpaketselektor (DPS), der die Reihenfolge einer Weiterleitung von Safety-Datenpaketen (DSP1...) und HMI-Datenpaketen (DPH1...) auf dem Kommunikationskanal (MK) bis zur externen Datenschnittstelle (MD) anwendungsabhängig steuert,
g) wobei der Kommunikationskanal (MK) für die Datenpakete (DSP1...; DPH1...) mit der Datenschnittstelle (MSD) des Safetymoduls (MSM) der lokalen Verarbeitungseinheit (MSW) und der externen Datenschnittstelle (MD) verbunden ist.

2. Mobiles Bedien- und Beobachtungsgerät (M) nach Anspruch 1, wobei der Datenpaketselektor (DPS) bei der Einspeisung von Datenpaketen in den Kommunikationskanal (MK) Safety-Datenpaketen (DSP1...) Vorrang vor HMI-Datenpaketen (DPH1...) einräumt.

3. Mobiles Bedien- und Beobachtungsgerät (M) nach Anspruch 1 oder 2, wobei der Datenpaketselektor (DPS) eine von der lokalen Verarbeitungseinheit (MSW) ausgeführte Applikation darstellt.

4. Mobiles Bedien- und Beobachtungsgerät nach einem der Ansprüche 1 bis 3, wobei das Eingabeelement zur Auslösung einer sicherheitsrelevanten Eingabe (ML1) ein Stop-Taster (MST) ist, insbesondere ein Not-Aus-Taster.

5. Mobiles Bedien- und Beobachtungsgerät nach einem der Ansprüche 1 bis 3, mit zwei Eingabeelementen (MST;MZT) zur Auslösung sicherheitsrelevanter Eingaben (ML1;ML2).

6. Mobiles Bedien- und Beobachtungsgerät nach Anspruch 5, wobei die Eingabeelemente zur Auslösung sicherheitsrelevanter Eingaben (ML1;ML2) ein Stop-Taster (MST), insbesondere ein Not-Aus-Taster, und ein Zustimmungstaster (MZT) sind.

7. Mobiles Bedien- und Beobachtungsgerät nach einem der vorangegangenen Ansprüche, wobei die eine Verarbeitungseinheit (MSM1) als eine Mastereinheit über die Datenschnittstelle (MSD) an den Kommunikationskanal (MK) für Datenpakete (DSP1...; DPH1...) ankoppelbar ist, und die andere Verarbeitungseinheit (MSM2) als eine Slaveeinheit mit der einen Verarbeitungseinheit (MSM1) verbunden ist.

8. Mobiles Bedien- und Beobachtungsgerät nach einem der vorangegangenen Ansprüche, wobei in den Verarbeitungseinheiten (MSM1; MSM2) zur Ableitung der Safety-Datenpakete (DSP1, DSP1a) Safety-Applikationen ausgeführt werden, die auf unterschiedlichen programmtechnischen Implementierungen beruhen.

9. HMI System, mit
a) zumindest einem mobilen Bedien- und Beobachtungsgerät (M) nach einem der vorangegangenen Ansprüche 1 bis 8 zur Bedienung- und Beobachtung eines technischen Prozesses,
b) einer Zentralstation zur Steuerung des technischen Prozesses, welche aufweist
b1) eine externe Datenschnittstelle zumindest zum Empfang von Datenpaketen (DSP1...; DPH1...) von einem mobilen Bedien- und Beobachtungsgerät (M), und
b2) einer zentralen Verarbeitungseinheit zumindest zur
b21) Verarbeitung von empfangenen HMI-Datenpaketen (DPH1...DPH4), und zur
b22) Dekodierung der sicherheitsrelevanten Eingaben (ML1; ML2) aus Safety-Datenpaketen (DPS1... DPS4) und zur Überprüfung von deren Datenintegrität.

## Claims

1. Mobile operating and monitoring device (M) having a safety module (MSM) for processing inputs for controlling a technical process, having
a) at least one input element (MST) for triggering a safety-relevant input (ML1),
b) two processing units (MSM1; MSM2), which in each case derive a safety data packet (DSP1; DSP1a) from the safety-relevant input (ML1) and compare these with one another by means of a data link (MSV) arranged between the processing units (MSM1; MSM2), and having
c) a data interface (MSD), via which in the event of a match one of the safety data packets (DSP1) is provided for feeding in to a communication channel (MK) for data packets (DSP1...; DPH1...),
the mobile operating and monitoring device having
d) an external data interface (MD) at least for the wireless dispatch of the data packets (DSP1...; DPH1...) to a central station,
e) a local processing unit (MSW) which processes an HMI application (MSW) in terms of data and creates therefrom at least HMI data packets (DPH1...DPH4), and
f) a data packet selector (DSP) which, as a function of the application, controls the sequence in which safety data packets (DSP1...) and HMI data packets (DHP1...) are forwarded on the communication channel (MK) to the external data interface (MD),
g) the communication channel (MK) for the data packets (DSP1...; DHP1...) being connected to the data interface (MSD) of the safety module (MSM) of the local processing unit (MSW) and the external data interface (MD).

2. Mobile operating and monitoring device (M) according to claim 1, wherein the data packet selector (DPS) grants priority to safety data packets (DSP1...) over HMI data packets (DPH1...) when feeding in data packets to the communication channel (MK).

3. Mobile operating and monitoring device (M) according to claim 1 or 2, wherein the data packet selector (DPS) represents an application executed by the local processing unit (MSW).

4. Mobile operating and monitoring device according to one of claims 1 to 3, wherein the input element for triggering a safety-relevant input (ML1) is a stop pushbutton (MST), in particular an emergency stop pushbutton.

5. Mobile operating and monitoring device according to one of claims 1 to 3, having two input elements (MST; MZT) for triggering safety-relevant inputs (ML1; ML2).

6. Mobile operating and monitoring device according to claim 5, wherein the input elements for triggering safety-relevant inputs (ML1; ML2) are a stop pushbutton (MST), in particular an emergency stop pushbutton, and a confirmation pushbutton (MZT) .

7. Mobile operating and monitoring device according to one of the preceding claims, wherein the one processing unit (MSM1) can be coupled to the communication channel (MK) for data packets (DSP1...; DPH1...) via the data interface (MSD) as a master unit, and the other processing unit (MSM2) is connected to the one processing unit (MSM1) as a slave unit.

8. Mobile operating and monitoring device according to one of the preceding claims, wherein safety applications are executed in the processing units (MSM1; MSM2) for deriving the safety data packets (DSP1; DSP1a), said safety applications being based on different program implementations.

9. HMI system, having
a) at least one mobile operating and monitoring device (M) according to one of the preceding claims 1 to 8, for operating and monitoring a technical process,
b) a central station for controlling the technical process, which has
b1) an external data interface at least for receiving data packets (DSP1...; DPH1...) from a mobile operating and monitoring device (M), and
b2) a central processing unit at least for
b21) processing received HMI data packets (DPH1...DPH4), and for
b22) decoding the safety-relevant inputs (ML1; ML2) from safety data packets (DPS1...DPS4) and for checking the data integrity thereof.

## Revendications

1. Appareil ( M ) mobile de commande et de contrôle, ayant un module ( MSM ) de traitement d'entrée pour la commande d'un processus technique, comprenant
a) au moins un élément ( MST ) d'entrée pour le déclenchement d'une entrée ( ML1 ) affectant la sécurité,
b) deux unités ( MSM1, MSM2 ) de traitement qui déduisent de l'entrée ( ML1 ) affectant la sécurité respectivement un paquet ( DSP1, DSPa ) de données safety et qui les comparent entre eux par une liaison ( MSV ) transversale de données entre les unités ( MSM1, MSM2 ) de traitement et
c) une interface ( MSD ) de données par laquelle, en cas de concordance, l'un des paquets ( DSP1 ) safety est préparé pour l'injection dans un canal ( MK ) de communication pour des paquets ( DSP1 ..., DPH1 ... ) de données,
l'appareil mobile de commande et de contrôle ayant
d) une interface ( MD ) extérieure de données au moins pour l'émission sans câble des paquets ( DSP1 ..., DPH1 ... ) de données vers un poste central
e) une unité ( MSW ) locale de traitement qui traite en technique de données une application HMI ( MSW ) et en élabore au moins des paquets ( DPH1 ... DPH4 ) de données HMI, et
f) un sélecteur ( DPS ) de paquets de données qui commande la succession d'un acheminement de paquets ( DSP1 ... ) de données safety et de paquets ( DPH1 ... ) de données HMI sur le canal ( MK ) de communication jusqu'à l'interface ( MD ) extérieure de données en fonction de l'utilisation,
g) dans lequel le canal ( MK ) de communication pour les paquets ( DSP1 ..., DHP1 ... ) de données est relié à l'interface ( MSD ) de données du module ( MSM ) safety de l'unité ( MSW ) local de traitement et à l'interface ( MD ) extérieure de données.

2. Appareil ( M ) mobile de commande et de contrôle suivant la revendication 1, dans lequel le sélecteur ( DPS ) de paquets de données accorde, lors de l'injection de paquets de données dans le canal ( MK ) de communication, la préséance au paquet ( DSP1... ) de données safety sur le paquet ( DPH1... ) de données HMI.

3. Appareil ( M ) mobile de commande et de contrôle suivant la revendication 1 ou 2, dans lequel le sélecteur ( DPS ) de données représente une application réalisée par l'unité ( MSW ) locale de traitement.

4. Appareil mobile de commande et de contrôle suivant l'une des revendications 1 à 3, dans lequel l'élément d'entrée pour le déclenchement d'une entrée ( ML1 ) affectant la sécurité est une touche ( MST ) d'arrêt, notamment une touche d'arrêt d'urgence.

5. Appareil mobile de commande et de contrôle suivant l'une revendications 1 à 3, comprenant deux éléments ( MST ; MZT ) d'entrée pour le déclenchement d'entrées ( ML1 ; ML2 ) affectant la sécurité.

6. Appareil mobile de commandes et de contrôles suivant la revendication 5, dans lequel les éléments d'entrée pour le déclenchement d'entrées ( ML1 ; ML2 ) affectant la sécurité sont une touche ( MST ) d'arrêt, notamment une couche d'arrêt d'urgence et une touche ( MST ) de confirmation.

7. Appareil mobile de commande et de contrôle suivant l'une des revendications précédentes, dans lequel l'une des unités ( MSM1 ) de traitement peut être couplée en tant qu'unité maître au canal ( MK ) de communication pour des paquets ( DSP1... ; DPH1... ) de données par l'intermédiaire de l'interface ( MSD ) de données et l'autre unité ( MSM2 ) de traitement est reliée en tant qu'unité esclave à une unité ( MSM1 ) de traitement.

8. Appareil mobile de commande et de contrôle suivant l'une des revendications précédentes, dans lequel, dans les unités ( MSM1 ; MSM2 ) de traitement, il est réalisé, pour la déduction des paquets ( DSP1, DSP1a) de données safety, des applications safety qui reposent sur des mises en oeuvre différentes en technique de programme.

9. Système HMI comprenant
a) au moins un appareil ( M ) mobile de commande et de contrôle suivant l'une des revendications précédentes 1 à 8 pour la commande et le contrôle d'un processus technique,
b) un poste central pour la commande du processus technique qui a
b1) une interface extérieure de données au moins pour la réception de paquets ( DSP1... ; DHP1... ) de données d'un appareil ( M ) mobile de commande et de contrôle, et
b2) une unité centrale de traitement pour au moins
b21) le traitement de paquets ( DPH1 ... DPH4 ) de données HMI reçues et pour
b22) le décodage des entrées ( ML1 ; ML2 ) affectant la sécurité dans les paquets ( DPS1 ... DPS4 ) de données safety et pour le contrôle de l'intégrité de ces données.
